# EUROPÄISCHE PATENTSCHRIFT

(11) **EP 1 981 678 B1**
(45) Veröffentlichungstag und Bekanntmachung des Hinweises auf die Patenterteilung: **04.05.2011**
(21) Anmeldenummer: 07726218.6
(22) Anmeldetag: 22.01.2007
(51) Int. Cl.: B23K 13/01, B23K 13/02, H05B 6/02, H05B 6/44

(54) **VERFAHREN UND VORRICHTUNG ZUM INDUKTIVEN HOCHFREQUENZSCHWEISSEN VON METALLPRODUKTEN MIT UNTERSCHIEDLICHEN MATERIALDICKEN UND/ODER MATERIALGÜTEN UNTER VERWENDUNG MINDESTENS ZWEIER VONEINANDER TRENNBAREN TEILINDUKTIONSLEITER**
METHOD AND APPARATUS FOR THE INDUCTIVE HIGH-FREQUENCY WELDING OF METAL PRODUCTS HAVING DIFFERENT MATERIAL THICKNESSES AND/OR MATERIAL GRADES USING AT LEAST TWO COMPONENT INDUCTION CONDUCTORS WHICH ARE SEPARABLE FROM ONE ANOTHER
PROCEDE ET DISPOSITIF DE SOUDAGE INDUCTIF A HAUTE FREQUENCE DE PRODUITS METALLIQUES AYANT DES EPAISSEURS DE MATERIAU ET/OU DES QUALITES DE MATERIAU DIFFERENTES EN UTILISANT AU MOINS DEUX CONDUCTEURS D'INDUCTION PARTIELS POUVANT ÊTRE SEPARES L'UN DE L'AUTRE

(30) Priorität: 31.01.2006 DE 102006004694
(43) Veröffentlichungstag der Anmeldung: 22.10.2008
(73) Patentinhaber: ThyssenKrupp Steel Europe AG, 47166 Duisburg (DE)
(72) Erfinder: PLHA, Jens, 40468 Düsseldorf (DE); KOCH, Martin, 47506 Neukirchen-Vluyn (DE); WISCHMANN, Stefan, 10437 Berlin (DE); NACKE, Bernhard, 31303 Burgdorf (DE); NIKANOROV, Alexander, 30167 Hannover (DE); SCHÜLBE, Holger, 37290 Meissner (DE); SCHMIDT, Mario, 47441 Moers (DE); VON LÖHNEYSEN, Henning, 34121 Kassel (DE)
(74) Vertreter: Cohausz & Florack
(86) Internationale Anmeldenummer: PCT/EP2007/050615
(87) Internationale Veröffentlichungsnummer: WO 2007/110253

(56) Entgegenhaltungen:
- DE-C- 975 798
- US-A- 2 938 993
- US-A- 4 197 441
- US-A- 4 506 126
- US-A- 4 751 360
- US-A- 6 037 556
- US-B1- 6 184 508

## Beschreibung

Die Erfindung betrifft ein Verfahren zum induktiven Hochfrequenzschweißen von mindestens zwei Metallprodukten gemäß dem Oberbegriff des Anspruchs 1. Daneben betrifft die Erfindung eine Vorrichtung zum induktiven Hochfrequenzschweißen von mindestens zwei Metallprodukten gemäß dem Oberbegriff des Anspruchs 8.

Ein Verschweißen von Metallprodukten unter Verwendung von induktiven Hochfrequenzströmen ist aus dem Stand der Technik bereits bekannt. Das Hochfrequenzschweißen erfolgt berührungslos und lässt insbesondere die Herstellung von Massenprodukten in kontinuierlichen Durchlaufverfahren zu. Beim induktiven Hochfrequenzschweißen wird durch einen Hochfrequenzströme führenden Induktionsleiter im zu verschweißenden Metallprodukt gegenläufige Hochfrequenzströme induziert, welche zu einer starken Erwärmung des Metallproduktes an den entsprechenden Hochfrequenzstrom führenden Stellen führt. Induziert werden immer geschlossene Strompfade, wobei im Wesentlichen zwei Effekte eine entscheidende Rolle spielen. Dies ist einerseits der "Proximity-Effekt", welcher dazu führt, dass die induzierten Stromdichten in unmittelbarer Nähe der Induktionsleiter am größten sind. Ferner erfolgt aufgrund des "Skin-Effekts" der Stromtransport der induzierten Hochfrequenzströme nicht innerhalb des Metallproduktes, wie etwa bei einem Gleichstrom, sondern im Wesentlichen auf dessen Oberfläche. Die induzierten Hochfrequenzströme verlaufen in geschlossenen Bahnen, welche durch die Anordnung der Induktionsleiter beeinflusst werden können. In der Regel wird der Induktionsleiter so angeordnet, dass sich aufgrund des "Skin-Effekts" die Rückflussstrombahnen auf Kantenbereiche der Metallprodukte konzentrieren. Dann werden die stromdurchflossenen Kantenbereiche entsprechend stark erwärmt. Die so erwärmten Kantenbereiche werden miteinander in Kontakt gebracht und verschweißen unter Bildung einer Schweißnaht miteinander.

Ein entsprechendes Verfahren ist aus der US-Patentschrift US 4,197,441 bekannt. Bei dem bekannten Verfahren wird ein Induktionsleiter, welcher an die zu herzustellende Schweißnaht angepasst ist, verwendet, um die kantennahen Bereiche der zu verschweißenden Metallprodukte entsprechend zu erwärmen. Problematisch bei dem bekannten Verfahren ist, dass bei Metallprodukten mit unterschiedlichen Wandstärken oder bestehend aus einen unterschiedlichen elektrischen Widerstand aufweisenden Werkstoffen die Erwärmung der kantennahen Bereiche sehr unterschiedlich erfolgt, so dass eine stabile Prozessführung beim Verschweißen entsprechender Metallprodukte nicht gewährleistet werden kann. Das Verschweißen von Metallprodukten mit unterschiedlichen Wandstärken oder bestehend aus einen unterschiedlichen elektrischen Widerstand aufweisenden Werkstoffen ist jedoch für die Herstellung von Halbzeugen, beispielsweise von "tailored Products" notwendig. "Tailored Products" zeichnen sich dadurch aus, dass diese an die Belastung angepasste unterschiedliche Wanddicken und/oder Materialgüten bzw. Werkstoffe aufweisen. Häufig werden zur Herstellung entsprechender "tailored Products" verschieden dicke Metallprodukte oder aus verschiedenen Werkstoffen bestehende Metallprodukte miteinander verschweißt. Derartige Metallprodukte können beispielsweise Metallflachprodukte "tailored Blanks", zu Hohlprofilen oder Rohren umgeformte Blechzuschnitte so genannte "tailored Tubes" oder Bänder, "tailored Strip", sein. Ein großes Einsatzgebiet der "tailored Products" ist der Automobilbau, da "tailored Products" ein optimales Verhältnis zwischen maximaler Belastung und Gewicht aufweisen und insofern an den jeweiligen Verwendungszweck sehr gut angepasst werden können.

Hiervon ausgehend liegt der vorliegenden Erfindung die Aufgabe zugrunde, ein gattungsgemäßes Verfahren zum induktiven Hochfrequenzschweißen sowie eine entsprechende gattungsgemäße Vorrichtung zum induktiven Hochfrequenzschweißen vorzuschlagen, mit welchem bzw. mit welcher Metallprodukte mit unterschiedlichen Materialdicken und/oder Materialgüten bzw. Werkstoffen prozesssicher miteinander verschweißt werden können.

Gemäß einer ersten Lehre der vorliegenden Erfindung wird ein gattungsgemäßes Verfahren in Anspruch 1 definiert.

Mit dem erfindungsgemäßen Verfahren ist es möglich, Metallprodukte mit unterschiedlichen Wandstärken und/oder Materialgüten mit unterschiedlichem elektrischen Widerstand miteinander prozesssicher zu verschweißen, da aufgrund der Anpassung der jeweiligen Teilinduktionsleiter die Erwärmung der Kantenbereiche individuell auf das jeweilige Metallprodukt eingestellt bzw. der induzierte Hochfrequenzstrom und dessen Weg im Metallprodukt so beeinflusst werden kann, dass die Metallprodukte prozesssicher auf die gewünschte Schweißtemperatur erwärmt werden können. Das bisher bestehende Problem, dass beispielsweise Metallprodukte mit einer kleineren Wandstärke stärker erwärmt wurden als Metallprodukte mit einer höheren Wandstärke, wird mit dem erfindungsgemäßen Verfahren auf einfache Weise gelöst. Gleiches gilt, wenn die Metallprodukte unterschiedliche elektrische Widerstände in Bezug auf die induzierten Hochfrequenzströme aufweisen. Natürlich können durch das getrennte Einstellen der Erwärmung auch gezielt unterschiedlich hohe Schweißtemperaturen der Kantenbereiche des Metallprodukts eingestellt werden, sofern beispielsweise unterschiedliche Werkstoffe der Metallprodukte dies erfordern.

Werden die Metallprodukte unter Aufrechterhaltung eines V-förmigen Spaltes in Schweißrichtung in der Schweißzone stumpf oder überlappend zusammengeführt, so kann, gemäß einer nächsten weitergebildeten Ausführungsform des erfindungsgemäßen Verfahrens, gezielt eine kontinuierliche Erwärmung des Kantenbereichs im Bereich des V-förmigen Spaltes der Metallprodukte erzeugt werden, um die Metallprodukte auf die gewünschte Schweißtemperatur in der Schweißzone zu erwärmen und kontinuierlich miteinander zu verschweißen.

Vorzugsweise werden, gemäß einer nächsten weitergebildeten Ausführungsform des erfindungsgemäßen Verfahrens, die Teilinduktionsleiter relativ zueinander verschoben, so dass verschieden lange zu verschweißende Kantenbereiche der jeweiligen Metallprodukte vor dem Verschweißen in der Schweißzone erwärmt werden. Damit kann auf einfache Weise, beispielsweise durch eine geringere Länge des erwärmten Kantenbereichs eine geringere Dicke eines der Metallprodukte berücksichtigt werden. Im Ergebnis werden die Metallprodukte im Bereich der Schweißzone auf die gleiche Temperaturen erwärmt, da ein Metallprodukt mit geringerer Dicke sich schneller erwärmt. Die Ursache hiefür ist darin zu finden, dass die Temperatur des Metallproduktes insbesondere auch von der Länge des jeweilig erwärmten Kantenbereichs abhängt. Natürlich können durch ein Verschieben der Teilinduktionsleiter gegeneinander auch unterschiedliche Materialgüten und damit unterschiedlich große elektrische Widerstände der einzelnen Metallprodukte berücksichtigt werden.

Besonders gute Ergebnisse gemäß der Erfindung und im Hinblick auf die herzustellende Schweißnaht werden dadurch erreicht, dass beim Schweißen das Verhältnis der Längen der erwärmten Kantenbereiche der jeweiligen Metallprodukte proportional zum Verhältnis der elektrischen Widerstände der Werkstoffe und/oder Dicken der Metallprodukte oder diesem entsprechend eingestellt wird. Durch diese Maßnahme können die unterschiedlichen Erwärmungseigenschaften verschiedener miteinander zu verschweißender Metallprodukte besonders gut kompensiert werden.

Besonders prozesssicher können mit dem erfindungsgemäßen Verfahren daher "tailored Products" hergestellt werden. "tailored Products" werden häufig für den Automobilbau verwendet, beispielsweise für die Konstruktion einer Karosserie und bestehen in der Regel aus Werkstoffen mit unterschiedlichen Wanddicken und Materialgüten. Sie ermöglichen einerseits eine belastungsgerechte Auslegung entsprechender Konstruktionsteile eines Automobils und andererseits ein möglichst geringes Gewicht.

Weisen die Teilinduktionsleiter parallel zur Schweißrichtung unterschiedliche Längen auf, können auf einfache Weise unterschiedlich lange Kantenbereiche der verschiedenen Metallprodukte erwärmt werden und somit unterschiedliche Materialdicken bzw. Materialgüten der jeweiligen Metallprodukte berücksichtigt werden.

Gemäß einer nächsten vorteilhaften Ausführungsform des erfindungsgemäßen Verfahrens, sind die Teilinduktionsleiter in Serie oder parallel geschaltet. Optional kann bei einer Parallelschaltung der Teilinduktionsleiter der Stromfluss in den einzelnen Teilinduktionsleitern im gleichen Drehsinn erfolgen. Die Serienschaltung der Teilinduktionsleiter ist die einfachste Ausführung der Verschaltung der Teilinduktionsleiter und damit die kostengünstigste. Die Parallelschaltung der Teilinduktionsleiter ermöglicht dagegen, in jedem Metallprodukt unterschiedliche Hochfrequenzströme zu induzieren und eine individuelle Erwärmung ohne Veränderung der geometrischen Position der Teilinduktionsleiter durchzuführen.

Vorzugsweise kann jeder Teilinduktionsleiter mit jeweils einer Hochfrequenzstromquelle verbunden sein, so dass eine maximale Flexibilität hinsichtlich des Energieeintrages in die jeweiligen Metallprodukte, beispielsweise auch durch Wahl einer unterschiedlichen Frequenz des Hochfrequenzstromes, besteht.

Auf besonders einfache Weise kann das erfindungsgemäße Verfahren dadurch weitergebildet werden, dass zwei Teilinduktionsleiter, insbesondere zwei spiegelbildlich angeordnete U-förmige Teilinduktionsleiter, mit im Wesentlichen quer zur Schweißrichtung verlaufenden Teilinduktionsleiterbereichen verwendet werden, wobei die in Schweißrichtung vor der Schweißzone angeordneten Teilinduktionsleiterbereiche vorzugsweise über den zu verschweißenden Kantenbereich des jeweiligen Metallprodukts hinausragen und optional in Schweißrichtung hinter der Schweißzone angeordnete Teilinduktionsleiterbereiche im Wesentlichen quer zur Schweißrichtung von der Mitte der Schweißnaht nach außen verlaufen. Das Hinausragen über die noch zu verschweißenden Kantenbereiche der jeweiligen Metallprodukte in Schweißrichtung vor der Schweißzone gewährleistet auf einfachem Wege, die Induktion eines Hochfrequenzstromes im Metallprodukt, welcher von dem Schnittpunkt des einen Teilinduktionsleiters mit dem noch zu verschweißenden Kantenbereich beispielsweise eines ersten Metallproduktes über die Schweißzone über einen zweiten zu verschweißenden Kantenbereich zum Schnittpunkt des anderen Teilinduktionsleiters mit dem Kantenbereich eines zweiten Metallproduktes fließt. Zunächst wird ein Hochfrequenzstrom aufgrund des Proximity- und des Skineffektes bis an den Kantenbereich des zu verschweißenden Metallprodukts induziert. Der anschließende Stromfluss im Kantenbereich des Metallprodukts erfolgt aufgrund des Skin-Effekts nahezu ausschließlich an der Oberfläche, so dass entsprechend hohe Stromdichten zu einer gezielten Erwärmung der zu verschweißenden Kantenbereiche führt. Die U-förmige Teilinduktionsleiter stellen dabei eine besonders einfache Geometrie der Teilinduktionsleiter zur Realisierung des genannten Stromflusses dar.

Gemäß einer zweiten Lehre der vorliegenden Erfindung wird eine gattungsgemäße Vorrichtung zum induktiven Hochfrequenzschweißen in Anspruch 8 definiert.

Wie bereits oben zum erfindungsgemäßen Verfahren ausgeführt, kann mit der erfindungsgemäßen Vorrichtung der in den Metallprodukten induzierte Stromfluss abhängig von der Materialdicke und/oder Materialgüte erfolgen, so dass mit einfachen Mitteln gewährleistet werden kann, dass unterschiedlich dicke Metallprodukte bzw. aus unterschiedlichen Werkstoffen bestehende Metallprodukte mit unterschiedlichen elektrischen Widerständen bestehende Metallprodukte prozesssicher miteinander verschweißt werden können.

Die Flexibilität der erfindungsgemäßen Vorrichtung im Hinblick auf die Verschweißung unterschiedlicher Metallprodukte kann dadurch gesteigert werden, dass zumindest in Schweißrichtung verschiebbar angeordnete Teilinduktionsleiter vorgesehen sind. Durch eine Verschiebung der den Metallprodukten jeweilig zugeordneten Teilinduktionsleitern kann die Erwärmung der Kantenbereiche in Abhängigkeit von der Materialdicke und/oder Materialgüte eingestellt werden. Die Schweißzone wird von der Verschiebung nicht beeinflusst, da sie fest durch den Kontaktbereich der beiden Metallprodukte vorgegeben ist.

Eine besonders homogene Verschweißung von Metallprodukten unterschiedlicher Dicke und/oder Materialgüten wird gemäß der Erfindung dadurch erreicht, dass die Teilinduktionsleiter derart angeordnet sind, dass das Verhältnis der Längen der erwärmten Kantenbereiche der jeweiligen Metallprodukte proportional zum Verhältnis der elektrischen Widerstände der Werkstoffe und/oder Dicken der Metallprodukte ist oder diesem entspricht. Vorzugsweise erfolgt eine entsprechende Anordnung vor Beginn des Schweißverfahrens. Es ist aber auch denkbar, die Anordnung der Teilinduktionsleiter während des Schweißverfahrens anzupassen.

Sind die Teilinduktionsleiter in Serie geschaltet und über Verbindungsmittel, insbesondere Kabel oder Verschraubungen, miteinander verbunden, wird lediglich eine einzige Hochfrequenzstromquelle zur Versorgung der Teilinduktionsleiter benötigt.

Werden die Teilinduktionsleiter parallel geschaltet oder ist für jeden Teilinduktionsleiter jeweils eine Hochfrequenzstromquelle vorgesehen, können unterschiedliche, die Materialdicke und/oder die Materialgüte berücksichtigende Hochfrequenzströme in die unterschiedlichen Metallprodukte induziert werden. Bei einer Parallelschaltung der Teilinduktionsleiter wird in der Regel nur eine Hochfrequenzquelle verwendet.

Eine besonders einfache Möglichkeit, beispielsweise eine geringere Materialdicke eines Metallproduktes zu berücksichtigen, wird dadurch erreicht, dass gemäß einer nächsten weitergebildeten Ausführungsform der erfindungsgemäßen Vorrichtung, die Teilinduktionsleiter in Schweißrichtung unterschiedliche Längen aufweisen.

Sind zwei Teilinduktionsleiter, insbesondere zwei spiegelbildlich angeordnete U-förmige Teilinduktionsleiter, mit im Wesentlichen quer zur Schweißrichtung verlaufenden Teilinduktionsleiterbereichen vorgesehen, wobei in Schweißrichtung vor der Schweißzone angeordnete Teilinduktionsleiterbereiche vorzugsweise über den zu verschweißenden Kantenbereich des jeweiligen Metallprodukts hinausragen und optional in Schweißrichtung hinter der Schweißzone angeordnete, im Wesentlichen quer zur Schweißrichtung verlaufende Teilinduktionsleiterbereiche von der Mitte der Schweißnaht nach außen verlaufen, kann auf einfache Weise der induzierte Hochfrequenzstrom gezielt an dem zu verschweißenden Kantenbereich entlang geführt werden, wobei dieser in der Schweißzone vom ersten auf das zweite Metallprodukt überwechselt. Durch die im Bereich in Schweißrichtung hinter der Schweißzone angeordneten Teilinduktionsleiterbereiche kann ein kontrolliertes Rückführen der induzierten Hochfrequenzströme in die Kantenbereiche der Metallprodukte erfolgen, so dass ein geschlossener Stromfluss entsteht und die Prozesskontrolle beim Schweißen insgesamt verbessert wird.

Schließlich kann die Anpassung der erfindungemäßen Vorrichtung an die zu verschweißenden Metallprodukte dadurch gewährleistet werden, dass oberhalb und unterhalb der zu verschweißenden Metallprodukte dem Metallprodukt zugeordnete Induktionsleiter vorgesehen sind. Dies kann beispielsweise notwendig werden, sofern die Metallprodukte sehr große Dicken aufweisen.

Bei sehr großen Dicken der zur verschweißenden Metallprodukte kann das erfindungsgemäße Verfahren bzw. die erfindungsgemäße Vorrichtung auch in Schweißrichtung hintereinander folgend mehrfach angewendet bzw. angeordnet verwendet werden. Beispielsweise kann in einem ersten Verfahrensschritt lediglich eine Erwärmung des zu verschweißenden Kantenbereichs des Metallprodukts erfolgen und in einem zweiten Verfahrensschritt das erwärmte Metallprodukt in Schweißrichtung folgend die Erwärmung auf Schweißtemperatur vollzogen werden.

Es gibt nun eine Vielzahl von Möglichkeiten das erfindungsgemäße Verfahren sowie die erfindungsgemäße Vorrichtung zum Hochfrequenzschweißen auszubilden und weiterzugestalten. Hierzu wird einerseits verwiesen auf die den Patentansprüchen 1 und 10 untergeordneten Patentansprüchen sowie auf die Beschreibung eines Ausführungsbeispiels im Verbindung mit der Zeichnung. Die Zeichnung zeigt in
- Fig. 1: eine schematische Draufsicht auf ein erstes Ausführungsbeispiel der erfindungsgemäßen Vorrichtung beim Verschweißen verschiedener Metallprodukte und
- Fig. 2: in einer schematischen Draufsicht das Ausführungsbeispiel aus Fig. 1 angepasst an die Verschweißung zweier weiterer Metallprodukte.

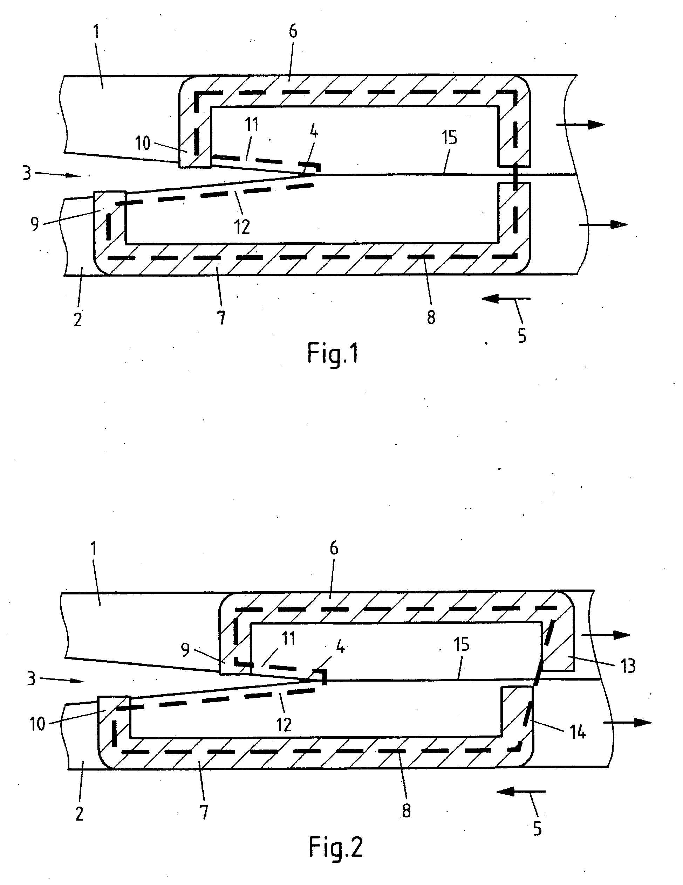

Die schematische Draufsicht der Fig. 1 zeigt ein Ausführungsbeispiel eines erfindungsgemäßen Verfahrens zum induktiven Hochfrequenzschweißen von zwei Metallprodukten 1, 2, bei welchem gemäß der Erfindung durch zwei voneinander trennbare Teilinduktionsleiter 6,7 die Erwärmung der zu verschweißenden Kantenbereiche 11,12 unabhängig voneinander eingestellt wird. Vorzugsweise werden die Metallprodukte 1,2 unter Ausbildung eines V-förmigen Spaltes 3 im Bereich einer Schweißzone 4 zusammengeführt und verschweißt. Hierzu werden in der Fig. 1 nicht dargestellte Mittel zur Durchführung einer Relativbewegung der Metallprodukte relativ zu einer Schweißzone sowie ebenfalls nicht dargestellte Führungsmittel zum Zusammenführen der Metallprodukte im Bereich der Schweißzone benötigt.

Die Metallprodukte 1, 2 werden durch die erwähnten Mittel entgegengesetzt zur Schweißrichtung 5 bewegt. Oberhalb der Metallprodukte 1, 2 sind nun zwei Teilinduktionsleiter 6, 7 angeordnet, welche an eine nicht dargestellte Hochfrequenzstromquelle angeschlossen sind. Die Teilinduktionsleiter 6, 7 können dabei über Kabel oder Verschraubungen miteinander verbunden sein. Es ist aber auch denkbar, dass beide Teilinduktionsleiter 6, 7 parallel geschaltet sind, so dass der Hochfrequenzstrom durch die einzelnen Teilinduktionsleiter 6, 7 unabhängig voneinander einstellbar ist. Vorzugsweise werden diese dann jeweils mit einer nicht dargestellten Hochfrequenzstromquelle verbunden, so dass nicht nur der Hochfrequenzstrom, sondern auch dessen Frequenz variabel von der Geometrie und dem Material des jeweils zugeordneten Metallproduktes eingestellt werden kann.

Werden die Teilinduktionsleiter 6,7 mit einem Hochfrequenzstrom gespeist, wird unmittelbar unterhalb der Teilinduktionsleiter 6, 7 aufgrund des "Proximity-Effekts" ein hochfrequenter Induktionsstrom 8 induziert, welcher in umgekehrter Richtung zu dem in die Teilinduktionsleiter 6, 7 eingespeisten Hochfrequenzstrom im Metallprodukt verläuft. Abhängig von der Stromfrequenz und dem Material konzentrieren sich die Stromdichten im Bereich der Oberfläche des Metallproduktes 1, 2 zunächst unmittelbar unterhalb der Induktionsleiter 6, 7. Hier wirken gleichzeitig "Proximity-Effekt" und "Skin-Effekt".

Die Teilinduktionsleiter 6,7 weisen Teilinduktionsleiterbereiche 9, 10 auf, welche annähernd senkrecht zur Schweißrichtung angeordnet sind. Da alle induzierten Hochfrequenz-Ströme geschlossene Strombahnen aufweisen, wird durch die Anordnung der Teilinduktionsleiterbereiche 9, 10 der U-förmigen Teilinduktionsleiter 6, 7 ein Hochfrequenzstrom entlang der zu verschweißenden Kantenbereiche 11, 12 der Metallprodukte 1, 2 induziert. Dieser Stromfluss, welcher im Wesentlichen durch den "Skin-Effekt" bestimmt wird, verläuft an der Oberfläche des Kantenbereiches 11,12 des Metallproduktes 1,2 und verursacht eine Erwärmung der Kantenbereiche 11,12, welche zumindest teilweise proportional zur Länge des stromdurchflossenen Kantenbereiches 11, 12 des jeweiligen Metallproduktes 1, 2 ist.

Im vorliegenden ersten Ausführungsbeispiel ist die Länge des erwärmten Kantenbereichs 11 des Metallproduktes 1 insgesamt kürzer als die des Metallproduktes 2, so dass berücksichtigt werden kann, dass das Metallprodukt 1 gegenüber dem Metallprodukt 2 beispielsweise eine geringere Materialdicke oder einen höheren elektrischen Widerstand aufweist, so dass dieses sich sehr viel schneller erwärmt. Wie aus Fig. 1 hervorgeht, erfolgt eine Relativbewegung 5 zwischen den Teilinduktionsleitern 6, 7 und den zügehörigen Metallprodukten 1, 2, wobei gleichzeitig in der Schweißzone 4 die Metallprodukte 1,2 in Kontakt gebracht werden. Hierdurch wird ermöglicht, dass in einem durchlaufenden Verfahren auf einfache Weise eine kontinuierliche Schweißnaht erzeugt wird, in dem die entsprechenden Kantenbereiche 11, 12 durch einen induzierten Hochfrequenzstrom kontinuierlich erwärmt werden und in der Schweißzone 4 stoffschlüssig miteinander verbunden werden.

Wie aus dem geschilderten Ausführungsbeispiel des erfindungsgemäßen Verfahren hervorgeht, können damit nicht nur unterschiedlich dicke Metallprodukte verschweißt werden, sondern auch unterschiedliche Materialien aufweisende, d.h. auch unterschiedliche Schmelztemperaturen aufweisende Metallprodukte miteinander verschweißt werden. Hierzu muss nur das Verhältnis der Längen der zu erwärmenden Kantenbereiche 11,12 zu einander entsprechend eingestellt werden. Zwar werden in dem gezeigten Ausführungsbeispiel der Fig. 1 die Metallprodukte stumpf zusammengeführt und miteinander verschweißt, ebenso ist aber auch eine überlappende Verschweißung der beiden Metallprodukte 1,2 ohne weiteres denkbar.

Die Fig. 2 zeigt nun, wie die erfindungsgemäße Vorrichtung bzw. das erfindungsgemäße Verfahren an ein Metallprodukt 1 mit einer noch geringeren Dicke oder einem noch höheren elektrischen Widerstand angepasst werden kann. Die voneinander trennbaren Teilinduktionsleiter 6, 7 werden zur Berücksichtigung der geringeren Materialstärke des Metallproduktes 1 weiter gegeneinander verschoben, so dass die Länge des Strom führenden Kantenbereichs 11 des Metallproduktes 1 noch kürzer ist. Damit kann die geringere Wärmedissipation bei Verwendung eines flacheren Metallproduktes beim Verschweißen der Metallprodukte 1, 2 berücksichtigt werden. Keine Rolle spielt, ob die senkrecht zur Schweißrichtung und in Schweißrichtung hinter der Schweißzone angeordneten Teilinduktionsleiterbereiche 13,14 der Teilinduktionsleiter 6, 7 genau gegenüberliegend angeordnet sind, da der induzierte Hochfrequenzstrom, ohne eine Kante entsprechend zu erwärmen, die Schweißnaht schräg überquerend, beispielsweise vom Metallprodukt 1 in das Metallprodukt 2 fließt. Auch in dieser nicht exakt gegenüberliegenden Position der einzelnen Teilinduktionsleiterbereiche 13, 14 wird eine kontrollierte Rückführung der induzierten Hochfrequenzströme zur Verbesserung der Prozesskontrolle erreicht.

Zwar ist im vorliegenden Ausführungsbeispiel lediglich das Schweißen eines Metallflachproduktes offenbart. Mit dem erfindungsgemäßen Verfahren bzw. der erfindungsgemäßen Vorrichtung kann aber ohne Weiteres auch unterschiedliche Materialdicken und -güten aufweisende Hohlprofile oder andere Metallprodukte, insbesondere "tailored Products", geschweißt werden.

## Patentansprüche

1. Verfahren zum induktiven Hochfrequenzschweißen von Metallprodukten (1, 2), bei welchem unter Verwendung von mindestens einem Induktionsleiter (6,7) die zu verschweißenden Kantenbereiche (11, 12) der Metallprodukte (1, 2) durch Induzieren von Hochfrequenzströmen erwärmt werden, die Metallprodukte (11, 12) und eine Schweißzone relativ zueinander bewegt werden, die zu verschweißenden Kantenbereiche in der Schweißzone (4) in Kontakt gebracht werden und unter Bildung einer Schweißnaht miteinander verschweißt werden,
**dadurch gekennzeichnet, dass**
ein Induktionsleiter verwendet wird, welcher aus mindestens zwei einzelnen, voneinander trennbaren Teilinduktionsleitern (6, 7) besteht, welche dem jeweiligen Metallprodukt (1, 2) zugeordnet und an diese jeweils angepasst sind und die Erwärmung durch die zwei voneinander trennbaren Teilinduktionsleiter (6, 7) der zu verschweißenden Kantenbereiche (11, 12) für das jeweilige Metallprodukt (1, 2) unabhängig voneinander eingestellt wird, wobei beim Schweißen das Verhältnis der Längen der erwärmten Kantenbereiche (11, 12) der jeweiligen Metallprodukte (1, 2) proportional zum Verhältnis der elektrischen Widerstände der Werkstoffe und/oder Dicken der Metallprodukte (1, 2) oder diesem entsprechend eingestellt wird.

2. Verfahren nach Anspruch 1,
**dadurch gekennzeichnet, dass**
die Metallprodukte (1, 2) unter Aufrechterhaltung eines V-förmigen in Schweißrichtung (5) verlaufenden Spaltes in der Schweißzone (4) stumpf oder überlappend zusammengeführt werden.

3. Verfahren nach Anspruch 1 oder 2,
**dadurch gekennzeichnet, dass**
die Teilinduktionsleiter (6, 7) relativ zueinander verschoben werden, so dass verschieden lange Kantenbereiche (11, 12) der jeweiligen Metallprodukte (1, 2) vor dem Verschweißen in der Schweißzone (4) erwärmt werden.

4. Verfahren nach einem der Ansprüche 1 bis 3,
**dadurch gekennzeichnet, dass**
die Teilinduktionsleiter (6, 7) parallel zur Schweißrichtung (5) unterschiedliche Längen aufweisen.

5. Verfahren nach einem der Ansprüche 1 bis 4,
**dadurch gekennzeichnet, dass**
die Teilinduktionsleiter (6, 7) in Serie oder parallel geschaltet sind.

6. Verfahren nach einem der Ansprüche 1 bis 5,
**dadurch gekennzeichnet, dass**
das jeder Teilinduktionsleiter (6,7) mit jeweils einer Hochfrequenzstromquelle verbunden ist.

7. Verfahren nach einem der Ansprüche 1 bis 6,
**dadurch gekennzeichnet, dass**
zwei Teilinduktionsleiter (6, 7), insbesondere zwei spiegelbildlich angeordnete, U-förmig Teilinduktionsleiter (6, 7), mit im Wesentlichen quer zur Schweißrichtung verlaufenden Teilinduktionsleiter bereichen verwendet werden, wobei die in Schweißrichtung (5) vor der Schweißzone (4) angeordneten Teilinduktionsleiterbereiche vorzugsweise über den zu verschweißenden Kantenbereich (11, 12) des jeweiligen Metallprodukts (1, 2) zumindest teilweise hinausragen und optional in Schweißrichtung (5) hinter der Schweißzone (4) angeordnete, im Wesentlichen quer zur Schweißrichtung (5) verlaufende Teilinduktionsleiterbereiche etwa von der Mitte der Schweißnaht nach außen verlaufen.

8. Vorrichtung zum induktiven Hochfrequenzschweißen von Metallprodukten (1, 2), mit Mitteln zur Durchführung einer Relativbewegung zwischen den Metallprodukten (1, 2) und einer Schweißzone sowie mindestens einem Induktionsleiter (6, 7), welcher die zu verschweißenden Kantenbereiche (11, 12) der Metallprodukte (1, 2) durch Induzieren von Hochfrequenzströmen erhitzt, zur Durchführung eines Verfahren nach einem der Ansprüche 1 bis 7,
**dadurch gekennzeichnet, dass**
der Induktionsleiter mindestens zwei einzelne, trennbare, dem jeweiligen Metallprodukt (1, 2) zugeordnete und an diese jeweils angepasste Teilinduktionsleiter (6, 7) aufweist und die Erwärmung durch die zwei voneinander trennbaren Teilinduktionleiter (6, 7) der zu verschweißenden Kantenbereiche (11, 12) der jeweiligen Metallprodukte (1, 2) unabhängig voneinander eingestellt wird, wobei die Teilinduktionsleiter (6, 7) derart angeordnet sind, dass das Verhältnis der Längen der erwärmten Kantenbereiche der jeweiligen Metallprodukte (1, 2) proportional zum Verhältnis der elektrischen Widerstände der Werkstoffe und/oder Dicken der Metallprodukte (1, 2) ist oder diesem entspricht.

9. Vorrichtung nach Anspruch 8,
**dadurch gekennzeichnet, dass**
zumindest in Schweißrichtung (5) verschiebbar angeordnete Teilinduktionsleiter (6, 7) vorgesehen sind.

10. Vorrichtung nach einem der Ansprüche 8 oder 9,
**dadurch gekennzeichnet, dass**
die Teilinduktionsleiter (6, 7) in Serie geschaltet sind und über Verbindungsmittel, insbesondere Kabel, Schleifkontakte oder Verschraubungen, miteinander verbunden sind.

11. Vorrichtung nach einem der Ansprüche 8 bis 10,
**dadurch gekennzeichnet, dass**
die Teilinduktionsleiter (6, 7) parallel geschaltet sind oder für jeden Teilinduktionsleiter (6, 7) eine Hochfrequenzstromquelle vorgesehen ist.

12. Vorrichtung nach einem der Ansprüche 8 bis 11,
**dadurch gekennzeichnet, dass**
die Teilinduktionsleiter (6, 7) in Schweißrichtung (5) unterschiedliche Längen aufweisen.

13. Vorrichtung nach einem der Ansprüche 8 bis 12,
**dadurch gekennzeichnet, dass**
zwei Teilinduktionsleiter (6, 7), insbesondere zwei spiegelbildlich angeordnete, U-förmige Teilinduktionsleiter (6, 7), mit im Wesentlichen quer zur Schweißrichtung verlaufenden Teilinduktionsleiterbereichen (9, 10, 13, 14) vorgesehen sind, wobei die in Schweißrichtung vor der Schweißzone angeordneten Teilinduktionsleiterbereiche (9,10) vorzugsweise über den zu verschweißenden Kantenbereich des jeweiligen Metallprodukts hinausragen und optional in Schweißrichtung hinter der Schweißzone angeordnete, jeweils im Wesentlichen quer zur Schweißrichtung verlaufende Teilinduktionsleiterbereiche (13, 14) etwa von der Mitte der Schweißnaht nach außen verlaufen.

## Claims

1. Method for the inductive high frequency welding of metal products (1, 2), in which the edge regions (11, 12) to be welded of the metal products (1, 2) are heated by inducing high frequency currents with the use of at least one induction conductor (6 ,7), the metal products (1, 2) and a welding zone are moved relative to one another, the edge regions to be welded are brought in contact in the welding zone (4) and while forming a weld seam are welded together ,
**characterised in that**
an induction conductor is used which consists of at least two single, mutually separable induction conductor components (6, 7) that are assigned to the respective metal product (1, 2) and are adapted thereto respectively, and the heating, by the two mutually separable induction conductor components (6, 7), of the edge regions (11, 12) to be welded is adjusted independently of each other for the respective metal product (1, 2), wherein the ratio of the lengths of the heated edge regions (11, 12) of the respective metal products (1, 2) during the welding is adjusted proportionally to the ratio of the electrical resistances of the materials and/or thicknesses of the metal products (1, 2), or correspondingly thereto.

2. Method according to Claim 1,
**characterized in that**
the metal products (1, 2) are brought together abutting or overlapping in the welding zone (4) maintaining a V-shaped gap extending in the welding direction (5).

3. Method according to Claim 1 or 2,
**characterized in that**
the induction conductor components (6, 7) are displaced relative to one another so that differently long edge regions (11, 12) of the respective metal products (1, 2) are heated before the welding in the welding zone (4).

4. Method according to any one of Claims 1 to 3,
**characterized in that** the induction conductor components (6, 7) have different lengths parallel to the welding direction (5).

5. Method according to any one of Claims 1 to 4,
**characterized in that** the induction conductor components (6, 7) are connected in series or parallel.

6. Method according to any one of Claims 1 to 5,
**characterized in that** each induction conductor component (6, 7) is respectively connected to a high frequency current source.

7. Method according to any one of Claims 1 to 6,
**characterized in that**
two induction conductor components (, ), in particular two mirror-symmetrically arranged U-shaped induction conductor components (, ), having induction conductor component regions essentially extending transversely to the welding direction are used, with the induction conductor component regions arranged before the welding zone (4) in the welding direction (5) preferably projecting at least partially beyond the edge region (11, 12) to be welded of the respective metal product (1, 2) and optionally with induction conductor component regions, arranged behind the welding zone (4) in the welding direction (5) and essentially extending transversely to the welding direction (5), extending outwards approximately from the middle of the weld seam.

8. Device for the inductive high fequency welding of metal products (1, 2), having means for carrying out a relative movement between the metal products (1, 2) and a welding zone, as well as at least one induction conductor (6, 7) which heats the edge regions (11, 12) to be welded of the metal products (1, 2) by inducing high frequency currents, for carrying out a method according to any one of Claims 1 to 7,
**characterised in that**
the induction conductor comprises at least two single, separable induction conductor components (6, 7) that are assigned to the respective metal product (1, 2) and are adapted thereto respectively, and the heating, by the two mutually separable induction conductor components (6, 7), of the edge regions (11, 12) to be welded of the respective metal products (1, 2) is adjusted independently of each other, wherein the induction conductor components (6, 7) are arranged so that the ratio of the lengths of the heated edge regions of the respective metal products (1, 2) is proportional to the ratio of the electrical resistances of the materials and/or thicknesses of the metal products (1, 2), or corresponds thereto.

9. Device according to Claim 8, **characterized in that** induction conductor components (6, 7) arranged displaceably at least in the welding direction (5) are provided.

10. Device according to any one of Claims 8 or 9,
**characterized in that** the induction conductor components (6, 7) are connected in series and joined together by connecting means, in particular cables, sliding contacts or screw fittings.

11. Device according to any one of Claims 8 to 10,
**characterized in that** the induction conductor components (6, 7) are connected in parallel, or a high frequency current source is provided for each induction conductor component (6, 7).

12. Device according to any one of Claims 8 to 11,
**characterized in that** the induction conductor components (6, 7) have different lengths in the welding direction (5).

13. Device according to any one of Claims 8 to 12,
**characterized in that** two induction conductor components (6, 7), in particular two mirror-symmetrically arranged U-shaped induction conductor components (6, 7), with induction conductor component regions (9, 10, 13, 14) essentially extending transversely to the welding direction being provided, with the induction conductor component regions (9, 10) arranged before the welding zone in the welding direction preferably projecting beyond the edge region to be welded of the respective metal product and optionally with induction conductor component regions (13, 14), arranged behind the welding zone in the welding direction and in each case essentially extending transversely to the welding direction, extending outwards approximately from the middle of the weld seam.

## Revendications

1. Procédé de soudage haute fréquence par induction de produits métalliques (1, 2), dans lequel, en utilisant au moins un conducteur d'induction (6, 7), les zones des bords à souder (11, 12) des produits métalliques (1, 2) sont chauffées par induction de courant haute fréquence, les produits métalliques (1, 2) et une zone de soudage sont déplacés l'un par rapport à l'autre, les zones des bords à souder (11, 12) sont mises en contact dans la zone de soudage (4) et soudées l'une à l'autre moyennant la formation d'un cordon de soudage,
**caractérisé en ce que** l'on utilise un conducteur d'induction qui est constitué d'au moins deux conducteurs d'induction partielle individuels (6, 7), séparables l'un de l'autre, qui sont attribués au produit métallique respectif (1, 2) et adaptés respectivement à celui-ci et **en ce que** l'échauffement des zones de bords à souder (11, 12) pour le produit métallique respectif (1, 2), lequel échauffement est induit par les deux conducteurs d'induction partielle (6,7) séparables l'un de l'autre, est réglé indépendamment pour l'un et pour l'autre, dans lequel, on règle, lors du soudage, le rapport des longueurs des zones des bords chauffées (11, 12) des produits métalliques respectifs (1, 2) proportionnellement au rapport des résistances électriques des matériaux et/ou des épaisseurs des produits métalliques (1, 2) ou en fonction de celui-ci.

2. Procédé selon la revendication 1,
**caractérisé en ce que** l'on rapproche, dans la zone de soudage (4), les produits métalliques (1, 2) l'un vers l'autre jusqu'à ce qu'ils se trouvent bord à bord ou se chevauchent, tout en conservant un interstice en forme de V tracé dans le sens du soudage (5).

3. Procédé selon la revendication 1 ou 2,
**caractérisé en ce que** les conducteurs d'induction partielle (6, 7) sont déplacés l'un par rapport à l'autre de sorte que des zones de bords (11, 12), de longueurs différentes, des produits métalliques respectifs (1, 2) sont chauffées avant leur soudage dans la zone de soudage (4).

4. Procédé selon l'une quelconque des revendications 1 à 3,
**caractérisé en ce que** les conducteurs d'induction partielle (6, 7) présentent, parallèlement au sens du soudage (5), des longueurs différentes.

5. Procédé selon l'une quelconque des revendications 1 à 4,
**caractérisé en ce que** les conducteurs d'induction partielle (6, 7) sont montés en série ou en parallèle.

6. Procédé selon l'une quelconque des revendications 1 à 5,
**caractérisé en ce que** chaque conducteur d'induction partielle (6, 7) est connecté respectivement à une source de courant haute fréquence.

7. Procédé selon l'une quelconque des revendications 1 à 6,
**caractérisé en ce que** l'on utilise deux conducteurs d'induction partielle (6, 7), en particulier deux conducteurs d'induction partielle (6, 7) en forme de U, disposés en miroir, présentant des zones de conducteurs d'induction partielle avec un tracé dans un sens sensiblement transversal à celui du soudage, dans lequel les zones de conducteurs d'induction partielle, se positionnant, dans le sens du soudage (5), devant la zone de soudage (4), dépassent de préférence, au moins partiellement, la zone de bord à souder (11, 12) du produit métallique respectif (1, 2) et qu'en option, des zones de conducteurs d'induction partielle, se positionnant, dans le sens du soudage (5), derrière la zone de soudage (4), avec un tracé dans un sens sensiblement transversal à celui du soudage (5) partent d'à peu près du centre du cordon de soudage vers l'extérieur.

8. Dispositif de soudage haute fréquence par induction de produits métalliques (1, 2), avec des moyens pour réaliser un mouvement relatif entre les produits métalliques (1, 2) et une zone de soudage ainsi qu'au moins un conducteur d'induction (6, 7), qui chauffe les zones des bords à souder (11, 12) des produits métalliques (1, 2) par induction de courants haute fréquence, pour mettre en oeuvre un procédé selon l'une quelconque des revendications 1 à 7,
**caractérisé en ce que** le conducteur d'induction présente au moins deux conducteurs d'induction partielle individuels (6, 7) séparables, attribués au produit métallique respectif (1, 2) et adaptés respectivement à celui-ci et **en ce que** le l'échauffement des zones de bords à souder (11, 12) pour le produit métallique respectif (1, 2), lequel échauffement est induit par les deux conducteurs d'induction partielle (6,7) séparables l'un de l'autre, est réglé indépendamment pour l'un et pour l'autre, dans lequel les conducteurs d'induction partielle (6, 7) sont disposés de sorte que le rapport des longueurs des zones de bords chauffées des produits métalliques respectifs (1, 2) est proportionnel au rapport des résistances électriques des matériaux et/ou des épaisseurs des produits métalliques (1, 2) ou correspond à celui-ci.

9. Dispositif selon la revendication 8,
**caractérisé en ce qu'**au moins dans le sens du soudage (5), ont prévoit des conducteurs d'induction partielle (6, 7) coulissables.

10. Dispositif selon l'une quelconque des revendications 8 ou 9,
**caractérisé en ce que** les conducteurs d'induction partielle (6, 7) sont montés en série et connectés entre eux par des moyens de connexion, en particulier des câbles, des contacts par frottement ou des raccords à vis.

11. Dispositif selon l'une quelconque des revendications 8 à 10,
**caractérisé en ce que** les conducteurs d'induction partielle (6, 7) sont montés en parallèle ou qu'une source de courant haute fréquence est prévue pour chaque conducteur d'induction partielle (6, 7).

12. Dispositif selon l'une quelconque des revendications 8 à 11,
**caractérisé en ce que** les conducteurs d'induction partielle (6, 7) présentent, dans le sens du soudage (5), des longueurs différentes

13. Dispositif selon l'une quelconque des revendications 8 à 12,
**caractérisé en ce** deux conducteurs d'induction partielle (6, 7), en particulier deux conducteurs d'induction partielle (6, 7) en forme de U, disposés en miroir, présentant des zones de conducteurs d'induction partielle (9, 10, 13, 14) avec un tracé dans un sens sensiblement transversal à celui du soudage sont prévus, dans lequel les zones de conducteurs d'induction partielle (9, 10) se positionnant, dans le sens du soudage, devant la zone de soudage, dépassent de préférence la zone de bord à souder du produit métallique respectif et qu'en option, des zones de conducteurs d'induction partielle (13, 14), se positionnant, dans le sens du soudage (5), derrière la zone de soudage (4), avec un tracé respectif dans un sens sensiblement transversal à celui du soudage (5) partent d'à peu près du centre du cordon de soudage vers l'extérieur.
